# EUROPÄISCHE PATENTANMELDUNG

(11) **EP 0 813 992 A2**
(43) Veröffentlichungstag der Anmeldung: **29.12.1997**
(21) Anmeldenummer: 97110028.4
(22) Anmeldetag: 19.06.1997
(51) Int. Cl.: B60N 2/28

(54) **Kindersitz für Personentransportmittel**

(30) Priorität: 19.06.1996 DE 29610790 U
(71) Anmelder: Schräder, Margarete, D-95352 Marktleugast (DE)
(72) Erfinder: Schräder, Margarete, D-95352 Marktleugast (DE)
(74) Vertreter: Tergau, Enno, Dipl.-Ing.

(57) **Zusammenfassung**

Ein Kindersitz (1) für ein Personentransportmittel weist ein Chassis (3) und eine daran lagerbare Sitzschale (4) auf. Das Chassis (3) stützt sich an der Rückenlehne (5) und an der Sitzfläche (6) des Fahrzeugsitzes (1) ab. Das Chassis (3) trägt mindestens eine Klemmeinrichtung (7) zur Arretierung eines fahrzeugeigenen Sicherheitsgurtsystems (8,9) am Chassis (3). Die Klemmeinrichtung (7) arretiert einen Gurtteil (8,9) des Sicherheitsgurtsystems in Montageendstellung des Chassis (3) mit einer in Sitzlängsrichtung (12) wirksamen Klemmkraftkomponente.

## Beschreibung

Die Erfindung betrifft einen Kindersitz für ein Personentransportmittel - nachfolgende kurz: 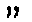 Fahrzeug" - mit den Merkmalen des Oberbegriffs des Anspruches 1.

Aus DE-T-3 878 549 ist ein auf der hinteren Sitzbank eines Kraftfahrzeuges angeordneter gattungsgemäßer Kindersitz bekannt. Am Chassis dieses Kindersitzes sind Klemmen zur Fixierung eines fahrzeugeigenen Sicherheitsgurtsystems derart angeordnet, daß ein Gurtteil des fahrzeugeigenen Dreipunktgurtes an einer einzigen Stelle des Chassis entweder mit in Sitzhöhenrichtung oder in Sitzbreitenrichtung wirksamer Klemmkraft fixiert ist. Diese Fixierung eines Gurtteiles des Sicherheitsgurtsystemes am Chassis gewährleistet in vielen Fällen keine ausreichende Lagesicherung des Kindersitzes am Fahrzeugsitz. Die Anordnung der Klemmen erfordert außerdem eine umständliche Handhabung des Kindersitzes und des Gurtsystems während der Montage. Ein aus DE-U-9 208 778 bekannter Kindersitz wird ebenfalls mit Hilfe eines fahrzeugeigenen Dreipunktgurtes an der Sitzbank eines Kraftfahrzeuges fixiert. An den beiden in Sitzbreitenrichtung gegenüberliegenden Längsseiten des Chassis ist jeweils eine Gurtführungseinrichtung angeordnet. Es ist auch eine Klemmung eines Gurtteiles vorgesehen. In DE-U-9 208 778 ist jedoch kein Hinweis auf eine bestimmte Positionierung oder Relativstellung von Klemmeinrichtungen gegenüber den zu klemmenden Gurtteilen gegeben. Es bleibt deshalb unklar, wie bei diesem Kindersitz das Sicherheitsgurtsystem am Chassis arretiert sein soll.

Der Erfindung liegt die Aufgabe zugrunde, die Lagesicherung und Handhabung eines gattungsgemäßen Kindersitzes zu verbessern.

Diese Aufgabe wird durch die Merkmalskombination des Anspruches 1 gelöst. Erfindungsgemäß ist die Klemmeinrichtung am Chassis derart positioniert, daß sie einen Gurtteil des Sicherheitsgurtsystems in Montageendstellung des Chassis mit einer etwa in Sitzlängsrichtung wirksamen Klemmkraftkomponente am Chassis arretiert.

Da zumindest eine Komponente der Klemmkraft der Klemmeinrichtung etwa in Fahrt- oder in Sitzlängsrichtung wirksam ist, ist es vorteilhaft, die Klemmeinrichtung auf der dem Fahrzeugsitz abgewandten Seite des Chassis anzuordnen. Durch eine derartige Positionierung der Klemmeinrichtung befindet sich die Montageseite zur Arretierung der Gurtteile und somit auch die Aufnahmeseite der Klemmeinrichtung für den zu arretierenden Gurtabschnitt im wesentlichen auf der dem Fahrzeugsitz in Sitzlängsrichtung abgewandten Seite des Chassis. Auf diese Weise wird eine bedienungsfreundliche Montage und Fixierung des Chassis am Fahrzeugsitz unterstützt. Die dem Fahrzeugsitz gewissermaßen gegenüberliegende Montageseite ermöglicht ein besonders bequemes Anbringen der Gurtteile an der Klemmeinrichtung. Darüber hinaus bewirken die etwa in Sitzlängsrichtung wirksamen Klemmkräfte der Klemmeinrichtung eine besonders gute Kraftübertragung des Sicherheitsgurtsystems auf das Chassis und fördern dadurch dessen stabile Lagesicherung.

Vorzugsweise liegt die resultierende Klemmkraftrichtung der Klemmeinrichtung oder zumindest die Hauptkomponente der Klemmkraft der Klemmeinrichtung etwa in einer oder mehreren zur Rückenlehne des Fahrzeugsitzes rechtwinklig angeordneten Klemmkraftebene oder -ebenen, also in einer oder mehreren durch Sitzlängsrichtung und Sitzhöhenrichtung aufgespannten Ebene oder Ebenen, ein. Hierdurch wird eine starre Fixierung des Chassis am Fahrzeugsitz mit geringem Klemmkraftaufwand und unter verhältnismäßig geringer Beanspruchung des Sicherheitsgurtsystems bzw. der Gurtteile unterstützt.

Die Arretierung des Sicherheitsgurtsystemes erfolgt insbesondere mit einer an der Chassis-Längsseite angeordneten Klemmeinrichtung. Eine derart positionierte Klemmeinrichtung kann mit einer oder mehreren zusätzlichen Arretier- oder Fixiervorrichtungen (in einer bevorzugten Ausführungsform ist mindestens eine zusätzliche Klemmeinrichtung vorgesehen) am Chassis kombiniert sein, um eine verbesserte Lagesicherung des Chassis zu erreichen.

Die erfindungsgemäße Arretierung eines Gurtteiles vermeidet besonders wirksam seitliche Schwenk- oder Kippbewegungen des Chassis. Das Chassis ist durch die Klemmkraftrichtung der Klemmeinrichtung auch gegen unerwünschte Lageänderungen in Sitzlängsrichtung gut geschützt.

Vorzugsweise handelt es sich bei dem fahrzeugeigenen Sicherheitsgurtsystem um einen Dreipunktgurt, der meistenteils als Automatikgurt ausgebildet ist und einen Beckengurtteil sowie einen Schultergurtteil aufweist, die in der nachstehenden Beschreibung kurz als Beckengurt bzw. als Schultergurt bezeichnet sind.

Durch die erfindungsgemäße Arretierung eines Gurtteiles, z.B. des Beckengurtes oder des Schultergurtes, am Chassis wird der Automatikgurt im Kindersitzbereich in einen Statikgurt verwandelt. Dies erhöht die Lagesicherheit des Kindersitzes am Fahrzeugsitz zusätzlich. Gleichzeitig wird eine starre Fixierung des Chassis am Fahrzeugsitz erzielt. Diese starre Fixierung wird vorteilhaft unterstützt, wenn das Chassis sowohl an der Rückenlehne als auch an der Sitzfläche des Fahrzeugsitzes mit jeweils einem im wesentlichen flächigen Anlagebereich anliegt. Dabei schützt der rücklehnenseitige Anlagebereich des Chassis den Kindersitz im Falle eines Heckaufpralles vor Lageänderungen.

Vorzugsweise ist die Klemmeinrichtung kostengünstig aus einem stabilen Kunststoff hergestellt. Die verhältnismäßig einfache Mechanik einer Klemmeinrichtung unterstützt deren Langlebigkeit und sichere Funktionsweise und trägt dadurch ebenfalls zur Sicherheit des Rückhaltesystems bzw. des Kindersitzes bei.

Vorteilhaft ist das Chassis mit einer daran abnehmbar befestigten Sitzschale für das Kind kombiniert. Dieser zweiteilige Aufbau des gesamten Kindersitzes hat den Vorteil, daß das Chassis immer am Fahrzeugsitz befestigt bleiben kann und durch seine starre Fixierung keine Beschädigungen des Fahrzeuges oder Verletzungen der Fahrgäste hervorrufen kann. Gleichzeitig braucht nicht mehr der gesamte, aus Chassis und Sitzschale bestehende Kindersitz transportiert werden, sondern im wesentlichen nur noch die Sitzschale. Die hierdurch erzielte Gewichtsersparnis beim Transport des verbleibenden Kindersitzes, nämlich im wesentlichen der Sitzschale, bietet der den Kindersitz transportierenden Person eine ganz erhebliche Entlastung. Die problemlose Lagerung des Chassis am Fahrzeugsitz erspart außerdem zeitaufwendige Montagevorgänge bei der Fixierung des Kindersitzes am Fahrzeugsitz. Darüber hinaus hat die Lösbarkeit der Sitzschale den Vorteil, daß sie an dem Chassis eines Zweitfahrzeuges befestigt werden kann. Hierdurch ergibt sich eine universelle Handhabung der Sitzschale. Außerdem kann für mehrere, jeweils aus Chassis und Sitzschale zusammengesetzte Kindersitze bzw. Rückhaltesysteme ein- und dieselbe Sitzschale verwendet werden, wenn in unterschiedlichen Fahrzeugen entsprechende Chassis vorgesehen sind.

Das erfindungsgemäße Rückhaltesystem bzw. Kindersitz wird vorzugsweise in Kraftfahrzeugen eingesetzt. Ein Einsatz des Kindersitzes ist aber auch in anderen Arten von Personentransportmitteln möglich. So wird das Chassis z.B. an einem Flugzeugsitz montiert, wobei der am Flugzeugsitz vorhandene Beckengurt zur starren Befestigung des Chassis verwendet wird.

Die Arretierung des Sicherheitsgurtsystemes gemäß Anspruch 2 mit zwei Klemmeinrichtungen an den beiden Chassis-Längsseiten vermeidet verbessert seitliche Schwenk- oder Kippbewegungen des Chassis und unterstützt dessen starre Fixierung. Vorteilhaft ist ein Gurtteil an diesen beiden Klemmeinrichtungen zugleich arretiert. Das Chassis ist dann beidseitig gleichmäßig fixiert und durch die Klemmkraftrichtung der Klemmeinrichtungen gegen unerwünschte Lageänderungen in Sitzlängsrichtung verbessert geschützt.

In einer bevorzugten Ausführungsform können der Beckengurt und der Schultergurt eines Sicherheitsgurtsystems gleichzeitig an den beiden Klemmeinrichtungen der Chassis-Längsseiten arretiert sein. Hierzu werden der Beckengurt und der Schultergurt im Bereich des Chassis etwa deckungsgleich übereinandergelegt und gemeinsam an den beiden Chassis-Längsseiten festgeklemmt. In einigen Fällen ist es aber bereits ausreichend, lediglich den vorhandenen Beckengurt am Chassis zu arretieren. Um in diesem Fall auch einen eventuell vorhandenen Schultergurt des Sicherheitsgurtsystems sicherheitstechnisch sinnvoll zu verwenden, kann dieser Schultergurt an dem rücklehnenseitigen Anlagebereich des Chassis fixiert werden. Diese Fixierung erfolgt beispielsweise durch eine geeignete Arretier- und/oder Führungseinrichtung am Chassis.

Gemäß Anspruch 3 sind die beiden an den Chassis-Längsseiten positionierten Klemmeinrichtungen bezogen auf die Fahrzeugsitz-Sitzfläche etwa in der gleichen Sitzhöhe positioniert. Hierdurch wird im Kindersitzbereich ein etwa horizontaler Gurtverlauf des arretierten Gurtteiles erzwungen, wodurch der Kindersitz in Sitzbreitenrichtung beidseitig gleichmäßig fixiert ist.

Um eine gurtlängensparende Bauweise des Chassis zu erzielen und gleichzeitig mittels der arretierten Gurtteile eine verbesserte Haltekraft auf das Chassis auszuüben, wird in Anspruch 4 vorgeschlagen, die Klemmeinrichtung zwischen den der Rückenlehne und der Sitzfläche des Fahrzeugsitzes zugeordneten Anlagebereichen des Chassis zu positionieren.

Nach der Lehre des Anspruches 5 sind die dem Fahrzeugsitz zugeordneten Anlagebereiche des Chassis im wesentlichen eben ausgebildet, wodurch das Chassis eine besonders große wirksame Abstützfläche gegenüber dem Fahrzeugsitz aufweist. Diese mechanisch stabile Abstützung des Chassis wird weiter dadurch unterstützt, daß die Anlagebereiche durch einen Übergangsbereich verbunden sind, der in einem stumpfen Winkel zu den Anlagebereichen verläuft und die Klemmeinrichtung oder die Klemmeinrichtungen trägt. Diese Ausgestaltung des Chassis ermöglicht es, daß auch ein Beckengurt allein eine ausreichende Haltekraft auf das Chassis ausübt.

Gemäß Anspruch 6 sind die Längsseiten des Chassis von etwa in Sitzlängsrichtung verlaufenden Längsstreben gebildet, welche durch Querstreben miteinander verbunden sind. Diese Bauweise des Chassis ist besonders stabil und gleichzeitig konstruktiv einfach, wodurch die Herstellung dieses Rückhaltesystems bzw. Kindersitzes kostengünstig ist. Aus Streben bestehend ist das Chassis außerdem besonders gewichtssparend hergestellt. Dies erleichtert den Transport und die Montage des Kindersitzes am Fahrzeugsitz. Vorzugsweise sind die Streben als Rohrstreben ausgebildet, wodurch das Chassis noch materialsparender herstellbar ist und das Transportgewicht des Chassis vorteilhaft sinkt. Selbstverständlich wird der exakte Verlauf der Strebenteile und der verwendete Strebenwerkstoff derart ausgewählt, daß eine ausreichende Eigenstabilität des Chassis gegeben ist. Vorzugsweise wird ein geeigneter Kunststoff oder Metall für die Herstellung der Streben, insbesondere Rohrstreben, ausgewählt.

Gemäß den Ansprüchen 7 und 8 sind zwei miteinander korrespondierende Klemmbacken der Klemmeinrichtung als ein mit dem Chassis ortsfest verbundener Klemmaufsatz und ein gegenüber dem Klemmaufsatz schwenkbeweglicher Klemmhebel ausgebildet, wobei der Klemmaufsatz das Schwenklager des Klemmhebels trägt. Hierdurch ist eine besonders raumsparende und kompakte Bauweise der Klemmeinrichtungen gegeben.

Um eine Arretierung bzw. Klemmung des Gurtteiles in der Klemmeinrichtung mit besonders geringem Kraftaufwand des Monteurs zu erzielen, schlägt Anspruch 9 vor, den Klemmhebel derart schwenkbar zu lagern, daß er aus seiner den Gurtteil arretierenden Klemmstellung heraus in Richtung des rücklehnenseitigen Anlagebereiches des Chassis schwenkbar ist. In diesem Fall muß der Monteur den Klemmhebel unmittelbar vor der Klemmung des Gurtteiles lediglich von oben herab in Richtung des Chassis drücken.

Um Beeinträchtigungen der Klemmwirkung der Klemmeinrichtung zu vermeiden, schlägt Anspruch 10 vor, den Klemmhebel in seiner Klemmstellung zu verriegeln. Diese Maßnahme schafft auch eine zusätzliche Sicherheit für den am Fahrzeugsitz fixierten Kindersitz.

Nach der Lehre des Anspruches 11 ist der Klemmhebel zu seiner Verriegelung von einem Riegelhebel beaufschlagt. Dieser Riegelhebel ist zwischen mindestens zwei Funktionsstellungen verstellbar, z.B. schwenkbeweglich und/oder translationsbeweglich. Auf diesen Riegelhebel wirkt eine Federkraft derart ein, daß er erst unter Überwindung der Federkraft zur Entriegelung des Klemmhebels beweglich ist. Auf diese Weise wird mit einer technisch einfachen und kostengünstigen Maßnahme ein wirksamer Schutz gegen eine unerwünschte Entriegelung des Klemmhebels erzielt.

Um den Riegelhebel an der Klemmeinrichtung raumsparend und bedienungsfreundlich anzuordnen, ist er gemäß Anspruch 12 translationsbeweglich. Vorzugsweise ist der Riegelhebel hierbei derart positioniert, daß er entgegen der Federkraft etwa in Richtung der Fahrzeugsitz-Sitzfläche gedrückt werden muß. Eine gewollte Entriegelung des Klemmhebels ist dadurch besonders bedienungsfreundlich möglich.

Gemäß Anspruch 13 ist der Riegelhebel etwa in Bewegungsrichtung von einem Aufnahmeschacht durchsetzt zur Aufnahme des Schwenkfreiendes des Klemmhebels in seiner Klemmstellung. Diese Maßnahme schafft eine fertigungstechnisch besonders einfach realisierbare Lagesicherung des Klemmhebels in seiner Klemmstellung. Vorzugsweise nimmt der Aufnahmeschacht das Schwenkfreiende des Klemmhebels etwa formschlüssig auf, wodurch auch kleinere Schwenkbewegungen des Klemmhebels innerhalb seiner Klemmstellung wirksam vermieden werden. Außerdem kann das mit dem Aufnahmeschacht zusammenwirkende Schwenkfreiende des Klemmhebels in einer zusätzlichen Funktion als Führungshilfe für eine geführte Beweglichkeit des Riegelhebels dienen. Dadurch können zumindest einige Bauteile einer Bewegungsführung für den Riegelhebel eingespart werden.

Um die Arretierung eines Gurtteiles in der Klemmeinrichtung weiter zu verbessern, ist gemäß Anspruch 14 vorgesehen, daß die einander zugewandten wirksamen Klemmoberflächen der Klemmbacken etwa ein Negativ-Relief voneinander bilden. Hierdurch wird innerhalb der Klemmvorrichtung gewissermaßen ein mäanderförmiger Verlauf des arretierten Gurtabschnittes mit einer Mehrzahl von Wendepunkten erzwungen. Eine derartige Klemmung schafft einen besonders wirksamen Schutz des arretierten Gurtteiles gegen versehentliche Lageänderungen in Gurtlängsrichtung.

Fertigungstechnisch einfach sind die vorgenannten Negativ-Reliefs durch die Maßnahme gemäß Anspruch 15 herstellbar. Demzufolge weist die Klemmoberfläche des Klemmhebels einen etwa quer zur Gurtlängsrichtung verlaufenden rippenartigen Klemmvorsprung auf, während die Klemmoberfläche des Klemmaufsatzes eine zum Klemmvorsprung korrespondierende Klemmnut enthält. Selbstverständlich kann in einer kinematischen Umkehr auch der Klemmhebel die Klemmnut aufweisen. Vorteilhaft ist eine Erstreckung des Klemmvorsprunges und der Klemmnut entlang der gesamten Gurtbreite des zu arretierenden Gurtteiles. Auf diese Weise entfalten die Klemmbacken eine größtmögliche Arretierwirkung auf den entsprechenden Gurtteil.

Gemäß Anspruch 16 wird die Klemmwirkung auf den zu arretierenden Gurtteil zusätzlich erhöht, indem der Klemmhebel im Querschnitt etwa U-förmig ist und mit seinen als Hebelflanken wirksamen U-Schenkeln den Klemmaufsatz etwa quer zur Gurtlängsrichtung beidseitig derart überdeckt, daß der arretierte Gurtabschnitt auch zwischen den Hebelflanken und dem Klemmaufsatz eingeklemmt ist und eine zusätzliche Klemmkraftkomponente etwa in Sitzbreitenrichtung vorhanden ist. Hierdurch wird der mäanderförmige Verlauf des arretierten Gurtabschnittes in Gurtlängsrichung verlängert und die Lagesicherung des Gurtteiles in Gurtlängsrichtung entsprechend erhöht. Folglich ist auch das Chassis gegen ein seitliches Verrutschen in Sitzbreitenrichtung verbessert geschützt.

Gemäß Anspruch 17 ist eine weitere Lagesicherungsmaßnahme für das Chassis vorgesehen. Demnach ist das Chassis mit über den sitzflächenseitigen Anlagebereich bzw. Auflagebereich nach unten auf den Fahrzeugboden gerichteten Mitteln zur starren Abstützung des Chassis verbunden. Diese Abstützmittel verhindern im Falle eines Frontaufpralles ein Eintauchen des Chassis in die Sitzfläche des Fahrzeugsitzes.

Gemäß Anspruch 18 sind die Abstützmittel in Sitzhöhenrichtung verstellbar am Chassis fixiert, d.h. die Abstützmittel sind in ihrer Wirklänge verstellbar. Hierdurch kann das Chassis in seiner Neigungsstellung gegenüber der Fahrzeugsitz-Sitzfläche verstellt werden, so daß auch eine im Ausgangszustand nicht schwenkbare Sitzschale des Kindersitzes unterschiedliche Neigungsstellungen gegenüber dem Fahrzeugsitz einnehmen kann. Die Abstützmittel sind insbesondere an dem sitzflächenseitigen Freiende des Chassis fixiert, wodurch einerseits eine einfache Montage der Abstützmittel und andererseits eine für die Lagesicherung günstige Kraftübertragung zwischen dem Chassis und den Abstützmitteln erfolgt. In einer bevorzugten Ausführungsform sind verstellbare strebenartige Abstützmittel vorgesehen, welche in nach unten auf den Fahrzeugboden gerichteten Rohrstreben des Chassis längsverschiebbar geführt sind und in unterschiedlichen Verschiebestellungen fixiert werden können.

Die Ansprüche 19 bis 24 betreffen vorteilhafte Maßnahmen zur Lagesicherung der Sitzschale am Chassis. Diese Maßnahmen unterstützen insbesondere die Lagesicherung einer am Chassis lösbar befestigten Sitzschale. Vorteilhaft ist die Sitzschale zur Lagesicherung mit mindestens einem hakenförmigen Fixierteil verbunden, welches den rücklehnenseitigen Bereich des Chassis hintergreift oder beaufschlagt. Vorzugsweise ist das Fixierteil derart ausgebildet und positioniert, daß es eine ohnehin am Chassis vorhandene rücklehnenseitige Querstrebe hintergreift.

In einer bevorzugten Ausgestaltung ist der Fixierhaken beweglich, z.B. translationsbeweglich oder schwenkbar, wobei der Fixierhaken - ähnlich wie der Riegelhebel der Klemmeinrichtung - von einer Federkraft beaufschlagt sein kann. Eine Beweglichkeit des Fixierhakens ist insbesondere dann erforderlich, wenn die Sitzschale schwenkbar am Chassis gelagert ist, so daß auch der Fixierhaken ein gewisses Bewegungsspiel erfordert, um die Sitzschale in unterschiedlichen Schwenkstellungen am Chassis ausreichend zu fixieren. Sofern für die Sitzschale keine unterschiedlichen Neigungsstellungen gegenüber dem Chassis vorgesehen sind, sollte der Fixierhaken nur ein verhältnismäßig geringes Bewegungsspiel aufweisen, um den gesamten Kindersitz in sich möglichst stabil zu gestalten. Mit Hilfe des Fixierhakens entfallen herkömmlich verwendete und montagetechnisch umständliche Gurtmittel zur Lagesicherung der Sitzschale.

Gemäß Anspruch 20 ist der Fixierhaken an der dem rücklehnenseitigen Chassis-Anlagebereich zugewandten Seitenwand der Sitzschale angeordnet, wodurch ein besonders kurzer Kopplungsweg zwischen der Sitzschale und dem Chassis, z.B. einer Chassis-Querstrebe, entsteht. Dieser kurze Kopplungsweg unterstützt den Zusammenbau des Chassis und der Sitzschale als kompakte Einheit.

Der Fixierhaken unterstützt die Lagesicherung der Sitzschale vor allem bei einem Frontaufprall des Fahrzeugs. Alternativ zum Fixierhaken kann eine andere Fixiervorrichtung derart ausgestaltet sein, daß eine lösbare Verrastung, Verriegelung, Verklipsung, Verschrauben, Steckverbindung od. dgl. zwischen der Sitzschale und dem rücklehnenseitigen Bereich des Chassis erfolgt.

Gemäß Anspruch 21 ist an der Sitzschale ein Aufsatzelement befestigt, welches mit einem am Chassis über dessen sitzflächenseitigen Anlagebereich hinausstehenden Abschnitt nach Art einer Formschlußverbindung zusammenwirkt. Diese Formschlußverbindung ist vorteilhaft als Montagehilfe beim Aufsetzen der Sitzschale auf das Chassis wirksam und ermöglicht eine bedienungsfreundliche Zentrierung der Sitzschale am Chassis.

Anspruch 22 schlägt eine weitere Fixiermaßnahme für die Sitzschale vor. Demzufolge ist an der Unterseite der Sitzschale ein Fixiergestell befestigt, welches in einem in Fahrtrichtung vorderen Chassis-Bereich z.B. durch eine Rast-, Klemm-Schnappverbindung, Verriegelung o.dgl., lösbar fixiert ist. Diese Fixierung dient der Lagesicherung der Sitzschale insbesondere bei einem Heckaufprall.

Eine besonders einfache Fixierung des Fixiergestells am Chassis ergibt sich durch die Maßnahme gemäß Anspruch 23. Demzufolge weist das Fixiergestell einen in Sitzbreitenrichtung verlaufenden Quersteg auf, der am Chassis auf geeignete Weise lösbar arretiert ist.

Vorteilhaft hat das Fixiergestell eine zusätzliche Funktion zur Abstützung der Sitzschale. Hierzu ist am Fixiergestell gemäß Anspruch 24 ein zur Unterseite der Sitzschale hin gerichtetes Stützende angebracht, welches einen der Fahrzeugsitz-Rückenlehne in Sitzlängsrichtung abgewandten Bereich der Sitzschalen-Unterwand abstützt. In einer bevorzugten Ausführungsform ist die Wirklänge dieses Stützendes in Richtung auf die Sitzschalen-Unterwand veränderbar. Hierzu ist das Stützende z.B. teleskopartig in unterschiedliche Sitzhöhenstellungen einstellbar oder am oberen Freiende des Stützendes ist ein zusätzliches Höhenaufsatzteil befestigt. Mit Hilfe dieses höhenverstellbaren Stützendes kann eine schwenkbare Sitzschale mechanisch stabil in unterschiedlichen Neigungsstellungen gehalten werden.

Der Erfindungsgegenstand wird anhand der in den Figuren dargestellten Ausführungsbeispiele näher erläutert. Es zeigen:
- Fig. 1a, Fig. 1b: eine perspektivische Explosionsdarstellung des erfindungsgemäßen Kindersitzes bzw. Rückhaltesystems,
- Fig. 2: eine vergrößerte Seitenansicht der Klemmvorrichtung in einer Klemmstellung gemäß Detail II in Fig. 1,
- Fig. 3: die geschnittene Seitenansicht der Klemmvorrichtung entsprechend Schnittlinie III-III in Fig. 2,
- Fig. 4: die Seitenansicht der Klemmvorrichtung gemäß Fig. 3 in einer Lösestellung,
- Fig. 5: die Seitenansicht der Klemmvorrichtung gemäß Fig. 3 und Fig. 4 in einer Funktionszwischenstellung,
- Fig. 6: die perspektivische Darstellung des Kindersitzes gemäß Fig. 1 in seinem Montagezustand.

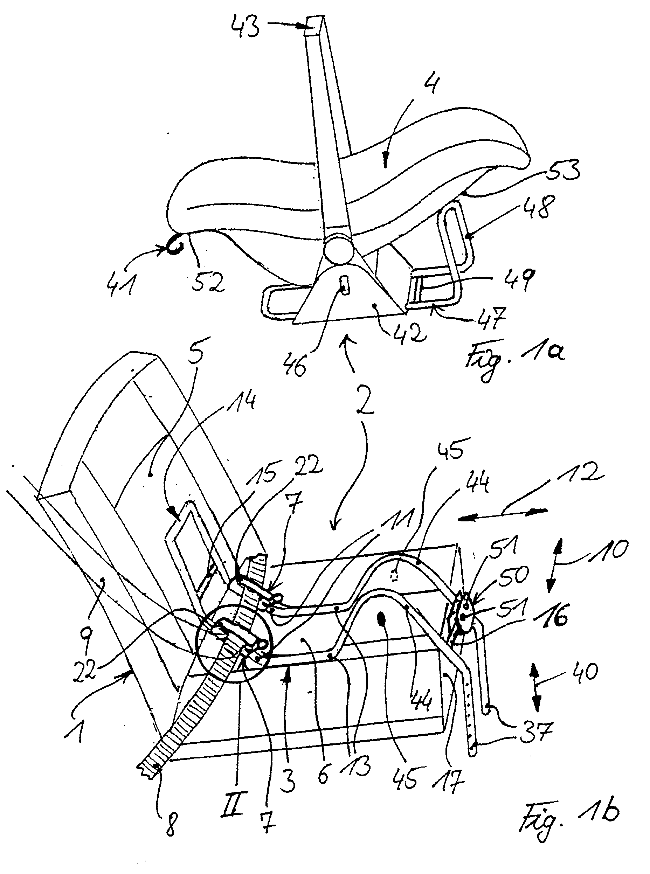

Der an einem Fahrzeugsitz 1 als Rückhaltesystem wirksame Kindersitz 2 weist ein Chassis 3 und eine daran schwenkbar befestigte Sitzwanne 4 auf (Fig. 1a,1b,6). Das Chassis 3 stützt sich sowohl an der Rückenlehne 5 als auch an der Sitzfläche 6 des Fahrzeugsitzes 1 ab. Hierbei liegt das Chassis 3 mit jeweils einem im wesentlichen ebenen bzw. flächigen Anlagebereich an der Rückenlehne 5 und an der Sitzfläche 6 an. Am Chassis 3 sind insgesamt zwei Klemmeinrichtungen 7 befestigt. Diese Klemmeinrichtungen 7 dienen der Arretierung eines fahrzeugeigenen Sicherheitsgurtsystems, welches in Fig. 1b und Fig. 6 als Dreipunktgurt ausgebildet ist und einen Beckengurtteil 8 sowie einen Schultergurtteil 9 aufweist. In einer weiteren, hier nicht dargestellten Ausführungsform kann das fahrzeugeigene Sicherheitsgurtsystem auch nur einen Beckengurtteil 8 aufweisen. In den Bereichen der beiden in Sitzbreitenrichtung 10 gegenüberliegenen Längsseiten des Chassis 3 ist jeweils eine Klemmeinrichtung 7 derart positioniert, daß der Beckengurtteil 8 und der Schultergurtteil 9 in Montageendstellung des Chassis 3 gleichzeitig an den beiden Längsseiten des Chassis 3 arretiert bzw. festgeklemmt sind, wobei die beiden Klemmeinrichtungen 7 auf der dem Fahrzeugsitz 1 in Sitzlängsrichtung 12 gegenüberliegenden Seite des Chassis 3 angeordnet sind und die Hauptkomponente der wirksamen Klemmkraft etwa in einer oder mehreren rechtwinklig zur Rückenlehne 5 angeordneten Ebenen, d.h. in einer oder mehreren durch Sitzlängsrichtung (12) und Sitzhöhenrichtung (40) aufgespannten Ebenen, einliegt, so daß eine Komponente der Klemmkraft in Fahrtrichtung oder in Sitzlängsrichtung 12 wirksam ist. Die beiden Klemmeinrichtungen 7 sind bezogen auf die Fahrzeugsitz-Sitzfläche 6 etwa in der gleichen Sitzhöhe positioniert. Die Klemmeinrichtungen 7 sind zwischen den der Rückenlehne 5 und der Sitzfläche 6 des Fahrzeugsitzes 1 zugeordneten Anlagebereichen des Chassis 3 positioniert. Hierbei sind die beiden im wesentlichen ebenen Anlagebereiche des Chassis 3 durch einen Übergangsbereich 11 miteinander verbunden, wobei dieser Übergangsbereich 11 in einem stumpfen Winkel zu den Anlagebereichen verläuft. Dieser Übergangsgereich 11 trägt an seiner dem Fahrzeugsitz 1 gegenüberliegenden Seite die beiden Klemmeinrichtungen 7. Die den Übergangsbereich 11 enthaltenden Längsseiten des Chassis 3 weisen in Sitzlängsrichtung 12 verlaufende Längsstreben 13 auf, welche durch mehrere in Sitzbreitenrichtung 10 verlaufende Querstreben miteinander verbunden sind. Eine erste Querstrebe bildet das Rückenlehnenende 14 des rücklehnenseitigen Anlagebereiches des Chassis 3. Eine zweite Querstrebe 15 ist unterhalb des Rücklehnenendes 14 angeordnet und stützt sich ebenfalls an der Rückenlehne 5 des Fahrzeugsitzes 1 ab. Eine dritte Querstrebe 16 ist im Bereich der in Sitzlängsrichtung 12 vorderen Sitzstirnfläche 17 des Fahrzeugsitzes 1 angeordnet.

Die Montageseite für die Arretierung der Gurtteile 8,9 ist die dem Fahrzeugsitz 1 abgewandte und der Sitzschale 4 zugewandte Seite des Chassis 3.

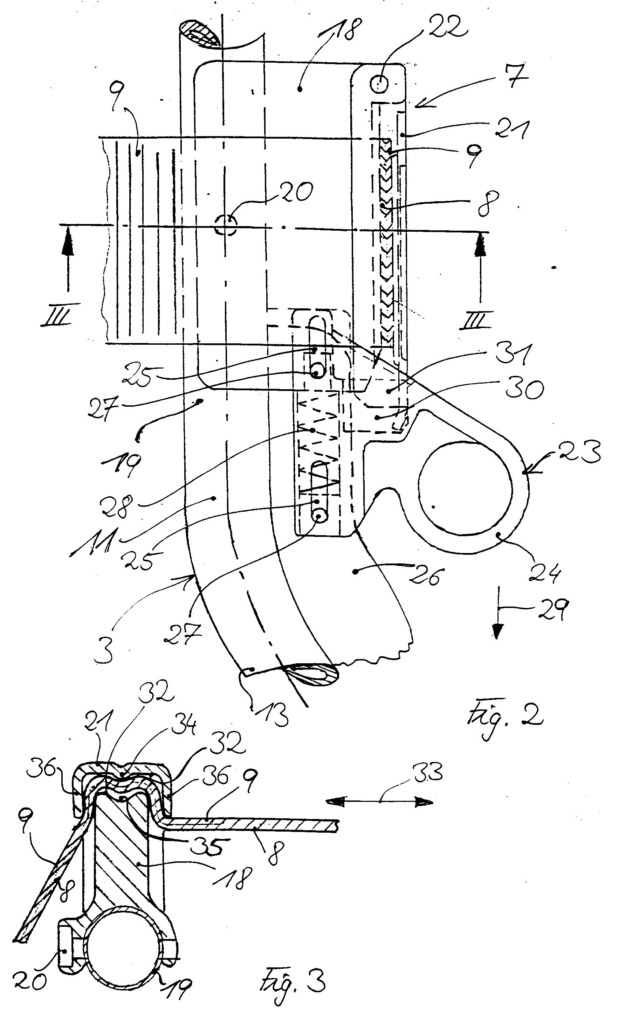

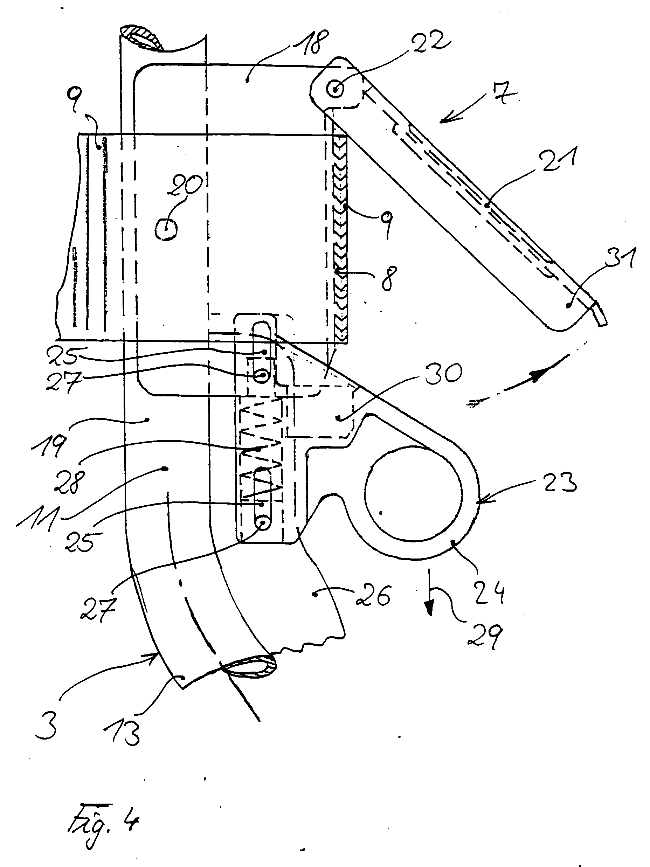

Anhand von Fig. 2-5 ist deutlich erkennbar, daß die Klemmeinrichtung 7 zwei miteinander korrespondierende Klemmbacken aufweist. Eine erste Klemmbacke ist als ein mit dem Chassis 3 ortsfest verbundener Klemmaufsatz 18 ausgebildet. Dieser Klemmaufsatz 18 ist im Übergangsbereich 11 an einem Strebenabschnitt 19 der Längsstrebe 13 befestigt. Der Klemmaufsatz 18 ist über einen in Fig. 3 lediglich schematisch dargestellten Verbindungsniet 20 oder ein ähnliches Verbindungselement ortsfest verbunden. Diese ortsfeste Fixierung des Klemmaufsatzes 18 wird durch seine formschlüssige Anlage an dem Rohraußenmantel des Strebenabschnittes 19 im Bereich des Verbindungsnietes unterstützt (Fig. 3). Die zweite Klemmbacke ist als ein gegenüber dem Klemmaufsatz 18 schwenkbeweglicher Klemmhebel 21 ausgebildet. Der Klemmaufsatz 18 trägt das in Sitzbreitenrichtung 10 verlaufende Schwenklager 22 des Klemmhebels 21. Die Schwenkebene des Klemmhebels 21 ist in Fig. 2, Fig. 4 und Fig. 5 durch die Zeichenblattebene aufgespannt und verläuft in Fig. 1b und Fig. 6, d.h. in Montagestellung des Chassis 3, rechtwinklig zur Fahrzeugsitz-Sitzfläche 6. Der Klemmhebel 21 ist aus seiner die Gurtteile 8,9 arretierenden Klemmstellung gemäß Fig. 2 heraus in Richtung des rücklehnenseitigen Anlagebereiches des Chassis 3, d.h. in Richtung der Rückenlehne 5 schwenkbar. Mit Hilfe eines Riegelhebels 23 ist der Klemmhebel 21 in seiner Klemmstellung gemäß Fig. 2 verriegelt. Der Riegelhebel 23 weist einen ringförmigen Betätigungsgriff 24 auf und ist zwischen seiner Schließstellung gemäß Fig. 2 und einer Öffnungsstellung translationsbeweglich, wobei es sich um eine geführte Bewegung handelt. Hierzu ist der Riegelhebel 23 von zwei Führungslöchern 25 mit langlochförmigem Querschnitt durchsetzt. An der in der Zeichenblattebene nicht sichtbaren Rückseite des Riegelhebels 23 sind ebenfalls zwei Führungslöcher 25 angeordnet. In diese Führungslöcher 25 greifen zwei an einem Führungssteg 26 des Strebenabschnittes 19 befestigte Führungszapfen 27 ein. In einer Aussparung des Führungssteges 26 ist eine den Riegelhebel 23 beaufschlagende Riegelfeder 28 beweglich fixiert, deren Federkraft den Riegelhebel 23 in seiner Schließstellung gemäß Fig. 2 hält. Unter Überwindung dieser Federkraft ist der Riegelhebel 23 in Öffnungsrichtung 29 zur Entriegelung des Klemmhebels 21 beweglich. Der Riegelhebel 23 ist auf seiner in Bewegungsrichtung dem Klemmhebel 21 zugewandten Seite von einem Aufnahmeschacht 30 durchsetzt. Dieser Aufnahmeschacht 30 nimmt in Schließstellung des Riegelhebels 23 gemäß Fig. 2 das ihm zugewandte Schwenkfreiende 31 des Klemmhebels 21 auf und erzwingt auf diese Weise die Klemmstellung des Klemmhebels 21.

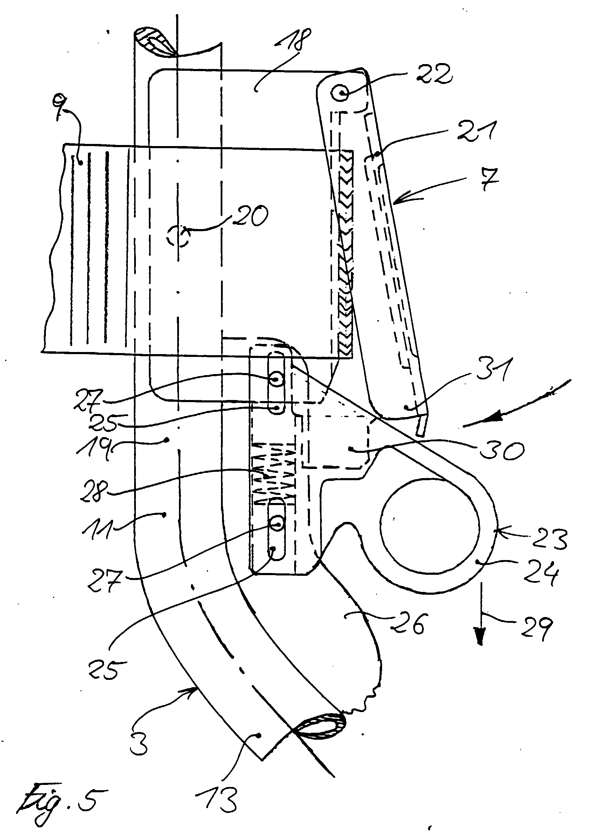

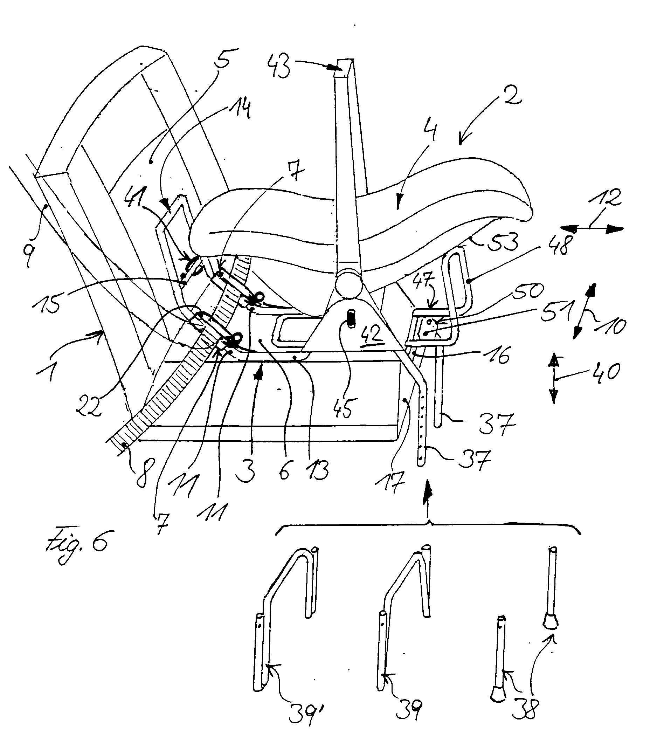

Die beiden einander zugewandten wirksamen Klemmoberflächen 32 des Klemmaufsatzes 18 und des Klemmhebels 21 sind etwa als ein Negativ-Relief voneinander ausgestaltet. Dabei weist die Klemmoberfläche 32 des Klemmhebels 21 einen etwa quer zur Gurtlängsrichtung 33 verlaufenden rippenartigen Klemmvorsprung 34 auf, der mit einer Klemmnut 35 an der Klemmoberfläche 32 des Klemmaufsatzes 18 korrespondiert. Der Klemmhebel 21 ist im Querschnitt etwa U-förmig (siehe Fig. 3) und überdeckt mit seinen beiden als Hebelflanken 36 wirksamen U-Schenkeln den Klemmaufsatz 18 in Gurtlängsrichtung 33 derart, daß die arretierten Gurtabschnitte der Gurtteile 8,9 auch zwischen den Hebelflanken 36 und dem Klemmaufsatz 18 eingeklemmt sind. Die Wirkungsweise der Klemmeinrichtung ist folgendermaßen: Zunächst werden die Gurtteile 8,9 mit einem vorbestimmten Gurtabschnitt auf die Klemmoberfläche 32 des Klemmaufsatzes 18 aufgelegt. Der Klemmhebel 21 wird in Richtung des Klemmaufsatzes 18 geschwenkt (Fig.5), so daß die Gurtteile 8,9 zwischen den beiden Klemmbacken 18,21 eingeklemmt werden. Der Klemmhebel 21 wird mit Hilfe des federkraftbeaufschlagten Riegelhebels 23 in seiner Klemmstellung fixiert (Fig. 2). Sobald die Arretierung der Gurtteile 8,9 aufgehoben werden soll, wird der Riegelhebel 23 unter Überwindung der Federkraft der Riegelfeder 28 in Öffnungsrichtung 29 überführt, wodurch der Klemmhebel 21 in seine Lösestellung zur Freigabe der Gurtteile 8,9 gelangt (Fig. 4).

An dem etwa vertikal nach unten in Richtung des nicht dargestellten Fahrzeugbodens weisenden Strebenfreienden 37 des Chassis 3 sind mehrere Ausführungsformen von Stützmitteln zur Abstützung des Chassis 3 am Fahrzeugboden adaptierbar (Fig. 6). Diese Stützmittel sind als zwei einzelne Stützfüße 38 oder als ein einziger sich etwa über die Sitzbreite erstreckender Stützbügel 39,39' ausgebildet. Die Abstützmittel 38 bzw. 39,39' sind entlang der rechtwinklig zur Sitzbreitenrichtung 10 und rechtwinklig zur Sitzlängsrichtung 12 verlaufenden Sitzhöhenrichtung 40 im Montagezustand verstellbar fixiert. Hierzu sind die Strebenfreienden 37 des Chassis 3 als Rohrstreben ausgebildet, welche die strebenartigen Abstützmittel 38,39,39' längsverschiebbar aufnehmen, so daß die Abstützmittel in unterschiedlichen Verschiebestellungen fixierbar sind.

In einer bevorzugten, hier nicht dargestellten Ausführungsform weist das Chassis 3 keine Abstützmittel 38,39,38' und ggfs. auch keine Strebenfreienden 37 zur Abstützung auf. Diese Abstützung gegen den Fahrzeugboden eines Kraftfahrzeuges kann nämlich z.B. im Flugzeug ersetzt sein durch eine Abstützung des Chassis 3 im Bereich der Querstrebe 16. Dort stützt sich das Chassis 3 im Bereich der Vorderkante der Flugzeugsitz-Sitzfläche ab.

Die Sitzschale 4 weist zu ihrer Lagesicherung am Chassis 3 einen Fixierhaken 41 auf, welcher an der dem rücklehnenseitigen Chassis-Anlagebereich zugewandten Seitenwand 52 der Sitzschale 4 angeordnet ist und im Montagezustand der Sitzschale 4 die Querstrebe 15 umgreift. Die Sitzschale 4 ist an einem im Querschnitt sich konisch verjüngenden Aufsatzelement 42 gelagert und in einer bevorzugten Ausführungsform daran schwenkbar gelagert. An diesem Aufsatzelement 42 ist außerdem ein Tragbügel 43 befestigt, mit dessen Hilfe das Aufsatzelement 42 bequem auf das Chassis 3 aufgesetzt wird. Das Aufsatzelement 42 korrespondiert beim Aufsetzen auf das Chassis 3 mit zwei bogenförmig verlaufenden und über den sitzflächenseitigen Anlagebereich des Chassis 3 in Sitzhöhenrichtung 40 hinausstehenden Zentrierstrebenabschnitten 44. Diese Zentrierstrebenabschnitte 44 sind einstückiger Bestandteil der Längsstreben 13. Außerdem tragen die Zentrierstrebenabschnitte 44 jeweils einen Rastdorn 45, welche mit ensprechenden Rastschlitzen 46 des Aufsatzelementes 42 verrasten können.

Am Aufsatzelement 42 ist ein im Querschnitt winkelförmiges Fixiergestell 47 befestigt, welches einen in Sitzlängsrichtung 12 verlaufenden Gestellteil und ein davon rechtwinklig abgebogenes, zum Kopfende der Sitzschale 4 gerichtetes Stützende 48 aufweist. Das Stützende 48 stützt das Kopfende der Sitzschale 4 an deren Unterseite 53 ab und ist dadurch sowohl bei einem Frontaufprall als auch bei einem Heckaufprall des Fahrzeuges zur Lagesicherung der Sitzschale 4 wirksam. Bei dem in Fig. 1 und Fig. 6 dargestellten Kindersitz handelt es sich um einen sogenannten 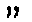 Gruppe Null-Sitz" für im Säuglingsalter befindliche Kinder, die mehr liegend als sitzend befördert werden. In dieser Sitzschale 4 wird das Kind mit in Fahrtrichtung des Fahrzeuges weisendem Kopf befördert.

Das Fixiergestell 47 ist am Chassis 3 verriegelbar (Fig. 6). Hierzu ist am Fixiergestell 47 ein in Sitzbreitenrichtung 10 verlaufender Quersteg 49 befestigt. Der Quersteg 49 wirkt mit der am Chassis 3 angeordneten Querstrebe 16 und einer daran befestigten Arretiereinrichtung 50 zusammen. Die Arretiereinrichtung 50 besteht aus einem etwa U-förmigen Blech mit nach oben gerichteten Freienden der U-Schenkel und begrenzt dadurch einen nach oben offenen Aufnahmeraum, in den der Quersteg 49 eingesetzt wird. Beim Einsetzen in die Arretiereinrichtung 50 wird der Quersteg 49 automatisch verriegelt. Hierzu greifen am Quersteg 49 befestigte - in den Zeichnungsfiguren jedoch nicht explizit dargestellte - Rastfedern, Rasthaken, Rasthaken, Schnappelemente od.gl. in an dem einen U-Schenkel oder an beiden U-Schenkeln der Arretiereinrichtung 50 angeordnete Führungslöcher 51 ein. In weiteren, hier nicht dargestellten Ausführungsbeispielen sind selbstverständlich auch andere geeignete Fixiermaßnahmen zur festen Verbindung des Fixiergestells 47 mit dem Chassis 3 möglich. So kann z.B. eine feste Verbindung zwischen dem Quersteg 49 und dem Chassis 3 auch durch ein gegenseitiges Verschrauben der beiden U-Schenkel der Arretiereinrichtung 50 erfolgen. In diesem Fall wirken mehrere Führungslöcher 51 mit den entsprechenden Befestigungsschrauben zusammen.

Die Montage der Sitzschale 4 am Chassis 3 geschieht folgendermaßen: Zur Vorzentrierung der Sitzschale 4 am Chassis 3 umgreift das Aufsatzelement 42 etwa formschlüssig die beiden Zentrierstrebenabschnitte 44. Während das Aufsatzelement 42 in Sitzhöhenrichtung 40 absinkt, verrasten die Rastdorne 45 automatisch mit den zugeordneten Rastschlitzen 46 des Aufsatzelementes 42. Danach wird der Fixierhaken 41 an der Querstrebe 15 des Chassis 3 fixiert. Daraufhin erfolgt eine Endzentrierung der Sitzschale 4 am Chassis 3, indem der Quersteg 49 des Fixiergestells 47 - wie oben erläutert - am Chassis 3 verriegelt wird.

### Bezugszeichenliste

- 1: Fahrzeugsitz
- 2: Kindersitz
- 3: Chassis
- 4: Sitzschale
- 5: Rückenlehne
- 6: Sitzfläche
- 7: Klemmeinrichtung
- 8: Beckengurtteil
- 9: Schultergurtteil
- 10: Sitzbreitenrichtung
- 11: Übergangsbereich
- 12: Sitzlängsrichtung
- 13: Längsstrebe
- 14: Rücklehnenende
- 15: Querstrebe
- 16: Querstrebe
- 17: Sitzstirnfläche
- 18: Klemmaufsatz
- 19: Strebenabschnitt
- 20: Verbindungsniet
- 21: Klemmhebel
- 22: Schwenklager
- 23: Riegelhebel
- 24: Betätigungsgriff
- 25: Führungsloch
- 26: Führungssteg
- 27: Führungszapfen
- 28: Riegelfeder
- 29: Öffnungsrichtung
- 30: Aufnahmeschacht
- 31: Schwenkfreiende
- 32: Klemmoberfläche
- 33: Gurtlängsrichtung
- 34: Klemmvorsprung
- 35: Klemmnut
- 36: Hebelflanke
- 37: Strebenfreiende
- 38: Stützfuß
- 39: Stützbügel
- 39': Stützbügel
- 40: Sitzhöhenrichtung
- 41: Fixierhaken
- 42: Aufsatzelement
- 43: Tragbügel
- 44: Zentrierstrebenabschnitt
- 45: Rastdorn
- 46: Rastschlitz
- 47: Fixiergestell
- 48: Stützende
- 49: Quersteg
- 50: Arretiereinrichtung
- 51: Führungsloch
- 52: Seitenwand
- 53: Unterseite

## Patentansprüche

1. Kindersitz (2) für ein Personentransportmittel - nachfolgend kurz: 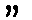 Fahrzeug" - mit einem sich an der Rückenlehne (5) und an der Sitzfläche (6) des Fahrzeugsitzes (1) abstützenden Chassis (3) zur lagesicheren Aufnahme einer Sitzschale (4), wobei am Chassis (3) mindestens eine Klemmeinrichtung (7) zur Arretierung eines fahrzeugeigenen Sicherheitsgurtsystems (8,9) positioniert ist,
dadurch gekennzeichnet,
daß die Klemmeinrichtung (7) einen Gurtteil (8,9) des Sicherheitsgurtsystems in Montageendstellung des Chassis (3) mit einer in Sitzlängsrichtung (12) wirksamen Klemmkraftkomponente am Chassis (3) arretiert.

2. Kindersitz nach Anspruch 1,
dadurch gekennzeichnet,
daß in den Bereichen beider in Sitzbreitenrichtung (10) gegenüberliegenden Chassis-Längsseiten jeweils eine Klemmeinrichtung (7) angeordnet ist.

3. Kindersitz nach Anspruch 2,
dadurch gekennzeichnet,
daß die beiden Klemmeinrichtungen (7) bezogen auf die Fahrzeugsitz-Sitzfläche (6) etwa in der gleichen Sitzhöhe positioniert sind.

4. Kindersitz nach Anspruch 1, 2 oder 3,
dadurch gekennzeichnet,
daß die Klemmeinrichtung (7) zwischen den der Rückenlehne (5) und der Sitzfläche (6) des Fahrzeugsitzes (1) zugeordneten Anlagebereichen des Chassis positioniert ist.

5. Kindersitz nach Anspruch 4,
dadurch gekennzeichnet,
daß das Chassis (3) zwischen seinen im wesentlichen ebenen Anlagebereichen einen in einem stumpfen Winkel zu den Anlagebereichen verlaufenden Übergangsbereich (11) aufweist, der die Klemmeinrichtung (7) trägt.

6. Kindersitz nach einem oder mehreren der vorhergehenden Ansprüche,
dadurch gekennzeichnet,
daß die Längsseiten des Chassis (3) von etwa in Sitzlängsrichtung (12) verlaufenden Längsstreben (13) gebildet sind, welche durch Querstreben (14,15,16) miteinander verbunden sind.

7. Kindersitz nach einem oder mehreren der vorhergehenden Ansprüche,
dadurch gekennzeichnet,
daß zwei miteinander korrespondierende Klemmbacken der Klemmeinrichtung (7) als ein mit dem Chassis (3) ortsfest verbundener Klemmaufsatz (18) und ein gegenüber dem Klemmaufsatz (18) schwenkbeweglicher Klemmhebel (21) ausgebildet sind.

8. Kindersitz nach Anspruch 7,
dadurch gekennzeichnet,
daß der Klemmaufsatz (18) das Schwenklager (22) des Klemmhebels (21) trägt.

9. Kindersitz nach Anspruch 7 oder 8,
dadurch gekennzeichnet,
daß der Klemmhebel (21) aus seiner den Gurtteil (8,9) arretierenden Klemmstellung heraus in Richtung des rücklehnenseitigen Anlagebereiches des Chassis (3) schwenkbar ist.

10. Kindersitz nach einem der Ansprüche 7 bis 9,
dadurch gekennzeichnet daß der Klemmhebel (21) in seiner Klemmstellung verriegelt ist.

11. Kindersitz nach Anspruch 10,
dadurch gekennzeichnet,
- daß der Klemmhebel (21) in Klemmstellung von einem Riegelhebel (23) beaufschlagt ist und
- daß auf den Riegelhebel (23) eine Federkraft derart einwirkt, daß er unter Überwindung der Federkraft zur Entriegelung beweglich ist.

12. Kindersitz nach Anpruch 11,
dadurch gekennzeichnet,
daß der Riegelhebel (23) translationsbeweglich ist.

13. Kindersitz nach Anspruch 11 oder 12,
dadurch gekennzeichnet
daß der Riegelhebel (23) etwa in Bewegungsrichtung von einem Aufnahmeschacht (30) durchsetzt ist zur Aufnahme des Schwenkfreiendes (31) des Klemmhebels (21) in Klemmstellung.

14. Kindersitz nach einem der Ansprüche 7 bis 13,
dadurch gekennzeichnet,
daß die einander zugewandten wirksamen Klemmoberflächen (32) der Klemmbacken (18,21) etwa ein Negativ-Relief voneinander abbilden.

15. Kindersitz nach Anspruch 14,
dadurch gekennzeichnet,
- daß die Klemmoberfläche (32) des Klemmhebels (21) einen etwa quer zur Gurtlängsrichtung (33) verlaufenden rippenartigen Klemmvorsprung (34) aufweist und
- daß die Klemmoberfläche (32) des Klemmaufsatzes (18) eine zum Klemmvorsprung (34) korrespondierende Klemmnut (35) aufweist.

16. Kindersitz nach einem der Ansprüche 7 bis 15,
dadurch gekennzeichnet,
daß der Klemmhebel (21) im Querschnitt etwa U-förmig ist und mit seinen als Hebelflanken (36) wirksamen U-Schenken den Klemmaufsatz (18) etwa quer zur Gurtlängsrichtung (33) beidseitig derart überdeckt, daß der arretierte Gurtabschnitt auch zwischen den Hebelflanken (36) und dem Klemmaufsatz (18) eingeklemmt ist.

17. Kindersitz nach einem oder mehreren der vorhergehenden Ansprüche,
dadurch gekennzeichnet,
daß das Chassis (3) mit über seinen sitzflächenseitigen Anlagebereich nach unten auf den Fahrzeugboden gerichteten Mitteln (38,39,39') zur Abstützung des Chassis (3) verbunden ist.

18. Kindersitz nach Anspruch 17,
dadurch gekennzeichnet,
daß die Abstützmittel (38,39,39') in Sitzhöhenrichtung (40) verstellbar am Chassis (3), insbesondere an dessen sitzflächenseitigen Freiende (37), fixiert sind.

19. Kindersitz nach einem oder mehreren der vorhergehenden Ansprüche,
dadurch gekennzeichnet,
daß die Sitzschale (4) zur Lagesicherung mit mindestens einem hakenförmigen Fixierteil (41) verbunden ist, welches den rücklehnenseitigen Bereich des Chassis (3) beaufschlagt, insbesondere eine rücklehnenseitige Querstrebe (15) des Chassis (3) hintergreift.

20. Kindersitz nach Anspruch 19,
dadurch gekennzeichnet,
daß der Fixierhaken (41) an der dem rücklehnenseitigen Chassis-Anlagebereich zugewandten Seitenwand (52) der Sitzschale (4) angeordnet ist.

21. Kindersitz nach einem oder mehreren der vorhergehenden Ansprüche,
dadurch gekennzeichnet,
daß das Chassis (3) einen in Sitzhöhenrichtung (40) über seinen sitzflächenseitigen Anlagebereich hinausstehenden Abschnitt (44) aufweist, welcher nach Art einer lösbaren Formschlußverbindung mit einem an der Unterseite (53) der Sitzschale (4) befestigten Aufsatzelement (42) zum Aufsetzen auf das Chassis (3) zusammenwirkt.

22. Kindersitz nach einem oder mehreren der vorhergehenden Ansprüche,
dadurch gekennzeichnet,
daß an der Sitzschale (4) ein Fixiergestell (47) befestigt ist, welches in einem in Fahrtrichtung vorderen Bereich des Chassis (3) lösbar fixiert ist.

23. Kindersitz nach Anspruch 22,
dadurch gekennzeichnet,
daß das Fixiergestell (47) einen in Sitzbreitenrichtung (10) verlaufenden Quersteg (49) aufweist, der von einer am Chassis (3) befestigten Arretiereinrichtung (50) lösbar beaufschlagt ist, z.B. mit der Arretiereinrichtung (50) verriegelbar ist.

24. Kindersitz nach Anspruch 22 oder 23,
dadurch gekennzeichnet,
daß das Fixiergestell (47) ein auf die Unterseite (53) der Sitzschale (4) hin gerichtetes Stützende (48) aufweist zur Abstützung des der Fahrzeugsitz-Rückenlehne (5) in Sitzlängsrichtung (12) abgewandten Bereiches der Sitzschalen-Unterseite (53).
